# EUROPÄISCHE PATENTSCHRIFT

(11) **EP 0 865 969 B1**
(45) Veröffentlichungstag und Bekanntmachung des Hinweises auf die Patenterteilung: **08.10.2003**
(21) Anmeldenummer: 98101708.0
(22) Anmeldetag: 02.02.1998
(51) Int. Cl.: B60R 5/04

(54) **Laderaum-Trennvorrichtung für Kraftwagen, insbesondere für Kombinations-Personenkraftwagen**
Loading space covering device for motor vehicles, especially for estate cars
Toiture amovible pour une plate-forme de chargement d'un véhicule, en particulier pour une fourgonnette

(30) Priorität: 17.03.1997 DE 19710786
(43) Veröffentlichungstag der Anmeldung: 23.09.1998
(73) Patentinhaber: PETER BUTZ GmbH & Co Verwaltungs-KG, 40764 Langenfeld (DE)
(72) Erfinder: Labeur, Luc, 3010 Kessel-Lo (BE)
(74) Vertreter: Patentanwälte Ostriga & Sonnet

(56) Entgegenhaltungen:
- DE-A- 2 749 560
- DE-U- 29 704 725

## Beschreibung

Die Erfindung betrifft eine Laderaum-Trennvorrichtung für Kraftwagen, insbesondere für Kombinations-Personenkraftwagen entsprechend dem Oberbegriff des Anspruchs 1. Eine solche Laderaum-Trennvorrichtung ist in der DE 27 49 560 A1 beschrieben.

Bei der bekannten Laderaum-Trennvorrichtung ist an einer Seite der die Werkstoffbahn tragenden Wickelwelle ein Formrichtgesperre vorgesehen. Das Formrichtgesperre enthält eine in Abroll-Drehrichtung sperrende, Sperrzähne tragende Rastscheibe, welche mit einer eine Stahlblechfeder bildenden Sperrklinke zusammenwirkt. Ein Ende der Sperrklinke ist in der fahrzeugseitig befestigten Halterung der Laderaum-Trennvorrichtung eingespannt, während das freie Ende der Sperrklinke einen Handbetätigungsansatz bildet.

Die Funktion der bekannten Laderaum-Trennvorrichtung gemäß der DE 27 49 560 A1 ist folgende:

Wenn die Werkstoffbahn, die beispielsweise als textile, folienhafte oder netzartige Werkstoffbahn ausgebildet sein kann, von der Wickelwelle abgerollt werden soll, ist es erforderlich, die Sperrklinke in ihre Lösestellung außer Eingriff mit der Rastscheibe zu versetzen. Dies kann dadurch geschehen, daß während des Abrollens der Werkstoffbahn die Sperrklinke ständig von Hand in ihre Lösestellung gedrückt wird. Für den Fall, daß die Laderaum-Trennvorrichtung an beiden Enden der Wickelwelle ein Formrichtgesperre aufweist, würde eine solche Anordnung eine zusätzliche Bedienungsperson zur Handhabung der Laderaum-Trennvorrichtung erfordern.

Andererseits ist gemäß der DE 27 49 560 A1 eine Arretiervorrichtung für die Sperrklinke in deren Lösestellung vorgesehen. Eine solche Arretiervorrichtung kann jedoch in nachteiliger Weise dazu führen, daß die abgewickelte Werkstoffbahn, welche das Ladegut festhalten soll, wickelwellenseitig nicht fixiert ist.

Weiterhin ist in der DE 27 49 560 A1 allgemein, d.h. ohne eine konkrete Lösung aufzuzeigen, erwähnt, daß die bekannte Konstruktion so gestaltet sein könne, daß sich beim erneuten Abwickeln der Werkstoffbahn auch zwangsläufig die Sperrklinke wieder entriegelt und in ihre Raststellung gesteuert wird.

Ausgehend von der bekannten Laderaum-Trennvorrichtung gemäß der DE 27 49 560 A1, liegt der Erfindung die Aufgabe zugrunde, die bekannte Laderaum-Trennvorrichtung so weiterzuentwickeln, daß diese eine bequeme und eine zugleich dem Sicherheitsbedürfnis der Fahrzeuginsassen entsprechende Betätigung gestattet.

Entsprechend der Erfindung wird diese Aufgabe mit den Merkmalen des Anspruchs 1 gelöst. Die Betätigungsvorrichtung weist ein mit der Wickelwelle mindestens mittelbar durch Reibschluß auf Drehmitnahme gekuppeltes Betätigungsglied auf, welches mit einer Sekundär-Reibfläche gegen eine mit der Wickelwelle drehfeste Primär-Reibfläche drückt und bei Abrolldrehung der Wickelwelle die Sperrklinke in ihre Lösestellung versetzt.

Die erfindungsgemäße LaderaumLaderaum-Trennvorrichtung gestattet folgende vorteilhafte Bedienungsweise:

Wenn die Werkstoffbahn von der Wickelwelle abgezogen wird, wird das Betätigungsglied infolge Reibschlußkupplung von der Wickelwelle selbst oder von einem mit der Wickelwelle bewegungseinheitlichen Bauteil bewegt und diese Bewegung dazu benutzt, die Sperrklinke in ihre Lösestellung zu versetzen. Bei Unterbrechung der Abrollbewegung wird die Lösestellung der Sperrklinke durch den Reibschluß aufrechterhalten. Erst bei einer Rückwärtsbewegung der Werkstoffbahn im Aufwickeldrehsinn der Wickelwelle gibt das Betätigungsglied die Sperrklinke frei, so daß diese wieder in ihre Sperrstellung zurückkehrt. Folglich ist die Wickelwelle gegen Abrolldrehung gesichert, während der freie Endbereich der Werkstoffbahn fahrzeugseitig lösbar festgelegt ist.

In weiterer Ausgestaltung der Erfindung ist eine druckfeste Bewegungskupplung zwischen Betätigungsglied und Sperrklinke vorgesehen. Dies bedeutet, daß das Betätigungsglied, bzw. vice versa die Sperrklinke, jeweils in einer Bewegungsrichtung unabhängig von dem anderen Bauteil ist.

Eine andere Erfindungsvariante besteht darin, daß das Betätigungsglied an seinem Außenumfang den die Sperrklinke in ihre Lösestellung drückenden Betätigungsnocken aufweist.

Eine bevorzugte erfindungsgemäße Ausführungsform, die eine kompakte Bauweise gestattet, ist dadurch gekennzeichnet, daß das Betätigungsglied eine koaxial zur Wickelwelle gelagerte, relativ zur Wickelwelle drehbare, die Sekundär-Reibfläche aufweisende Reibscheibe ist.

Im Zusammenhang mit der vorbeschriebenen bevorzugten Ausführungsform besteht eine vorteilhafte Weiterentwicklung der Erfindung darin, daß bei einer stirnendseitig der Wickelwelle angeordneten Rastscheibe die Reibscheibe mit ihrer sekundären Reibfläche gegen die sich radial erstreckende, nach außen weisende, auf der Stirnfläche der Rastscheibe angeordnet Primär-Reibfläche drückt.

Eine die Betätigung der erfindungsgemäßen Laderaum-Trennvorrichtung besonders erleichternde Ausführungsform besteht darin, daß die Sperrklinke auf einer sich achsparallel zur Wickelwelle erstreckenden Tasterwelle drehfest angeordnet ist, welche einen die auf der Wickelwelle aufgerollte Werkstoffbahn außen tangierenden Tastfinger trägt, der bei einer bestimmten Werkstoffbahn-Wickeldicke die Sperrklinke außer Eingriff mit der Rastscheibe versetzt.

Diese erfindungsgemäße Ausführungsform ist deswegen besonders vorteilhaft, weil zunächst eine in jedem Falle zur Sicherung des Ladeguts erforderliche Werkstoffbahn-Länge abzuwickeln ist, ohne daß bei einer Rückwärtsbewegung der Werkstoffbahn im Aufwickelsinne die Sperrklinke in ihre Sperrstellung versetzt werden kann.

Wenn sich andererseits bei hinreichend abgewickelter Werkstoffbahn die Sperrklinke in ihrer Sperrstellung befindet und die Lösestellung nicht durch eine weitere Abrolldrehung der Wickelwelle, verbunden mit einer Reibschluß-Drehmitnahme des Betätigungsgliedes (z.B. der Reibscheibe) erfolgen soll, sieht die Erfindung vor, daß die Sperrklinke mittels einer Handbetätigungsvorrichtung in ihre Lösestellung versetzbar ist.

Weitere vorteilhafte Erfindungsmerkmale ergeben sich aus zusätzlichen Unteransprüchen.

In den Zeichnungen ist ein bevorzugtes Ausführungsbeispiel entsprechend der Erfindung näher dargestellt, es zeigt
Fig. 1 eine schematische Ansicht einer Laderaum-Trennvorrichtung, deren axiale Länge gekürzt dargestellt ist,
Fig. 2-5 Schnittansichten entsprechend den in Fig. 1 mit II-II bis V-V bezeichneten Schnittlinien,
Fig. 6 eine Stirnansicht entsprechend dem in Fig. 1 mit VI bezeichneten Ansichtspfeil und
Fig. 7 eine an die Darstellung gemäß Fig. 1 angelehnte räumliche Darstellung in teilweise auseinandergezogener Anordnung der Einzelbauteile.

In den Zeichnungen ist eine Laderaum-Trennvorrichtung insgesamt mit 10 bezeichnet.

Die Laderaum-Trennvorrichtung 10 weist eine Wikkelwelle 11 auf, deren rohrförmiger Wickelmantel 12 eine gestrichelt dargestellte Werkstoffbahn 13 aufnimmt. Bei der Werkstoffbahn 13 kann es sich um ein textiles, folienartiges oder netzartiges Flächengebilde handeln. Die Lage der Wickelwelle 11 im Raum ist beliebig.

Der Wickelmantel 12 ist von einem letzteren axial gänzlich durchsetzenden Wellenkörper 14 getragen und mit diesem drehfest verbunden. An einem Ende besitzt der Wellenkörper 14 eine Keilnut 15, welche zur drehfesten Verbindung mit einem nicht dargestellten motorischen Antrieb, beispielsweise mit einem Federmotor, dient.

Die Abroll- bzw. Auszugsrichtung der Werkstoffbahn 13 ist mit A bezeichnet, während die Aufroll- bzw. Aufwickelrichtung der Werkstoffbahn 13 mit B bezeichnet ist. Die Werkstoffbahn 13 ist im übrigen in einer Kedernut 16 des rohrartigen Wickelmantels 12 gehalten.

Die zur beidendigen Lagerung des Wellenkörpers 14 erforderliche, fahrzeugseitig zu befestigende Halterung ist in den Zeichnungen nicht dargestellt.

Auf einem Ende des Wellenkörpers 14 ist eine asymmetrische Sperrzähne 17 aufweisende Rastscheibe R drehfest angeordnet.

Jeder Sperrzahn 17 weist eine Gleitflanke 18 und eine Sperrflanke 19 auf.

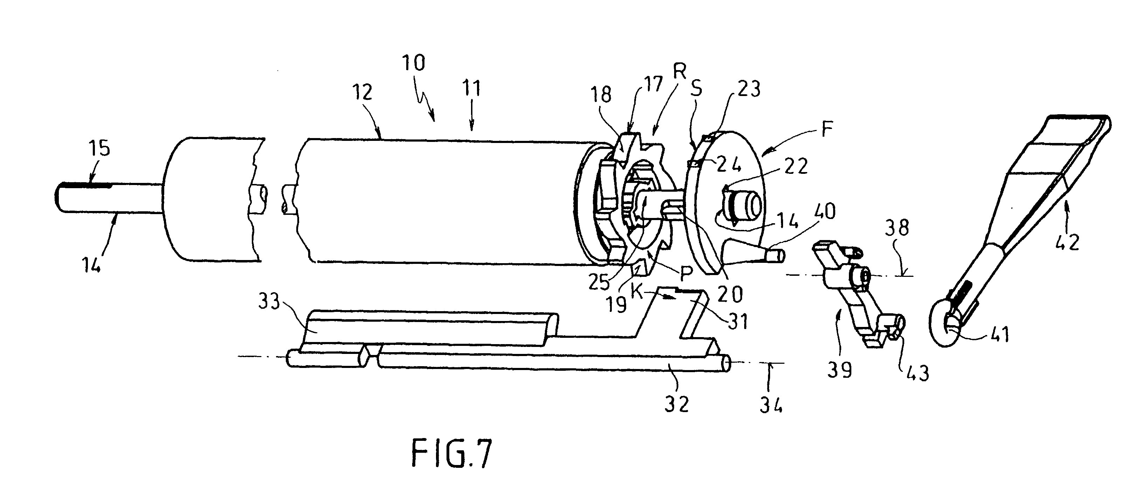

Außerhalb der Rastscheibe R ist der Wellenkörper 14 mit axial kurzen Verformungsrippen 20 versehen, über welche bei der Montage (gemäß Fig. 7 von rechts nach links) eine Reibscheibe F axial hinweggeschoben und nach Passieren der Verformungsrippen 20 um etwa 90° verdreht werden kann. Auf diese Weise stellen die Verformungsrippen 20 eine Axialsicherung für die Reibscheibe F dar. Hierzu ist die Reibscheibe F mit einer Lageröffnung 21 versehen, welche an diametral gegenüberliegenden Stellen durch Aussparungen 22 ergänzt ist, welche dem Raumbedarf der Verformungsrippen 20 entsprechen.

Die lediglich in Fig. 7 angedeuteten Anschläge 23, 24 der Reibscheibe F sorgen in Verbindung mit einem nicht dargestellten halterungsseitigen Gegenanschlag dafür, daß die Reibscheibe F sich auf ihrem Drehlagerbereich 25 nur über einen begrenzten Umfangswinkel relativ zur Rastscheibe R drehen kann.

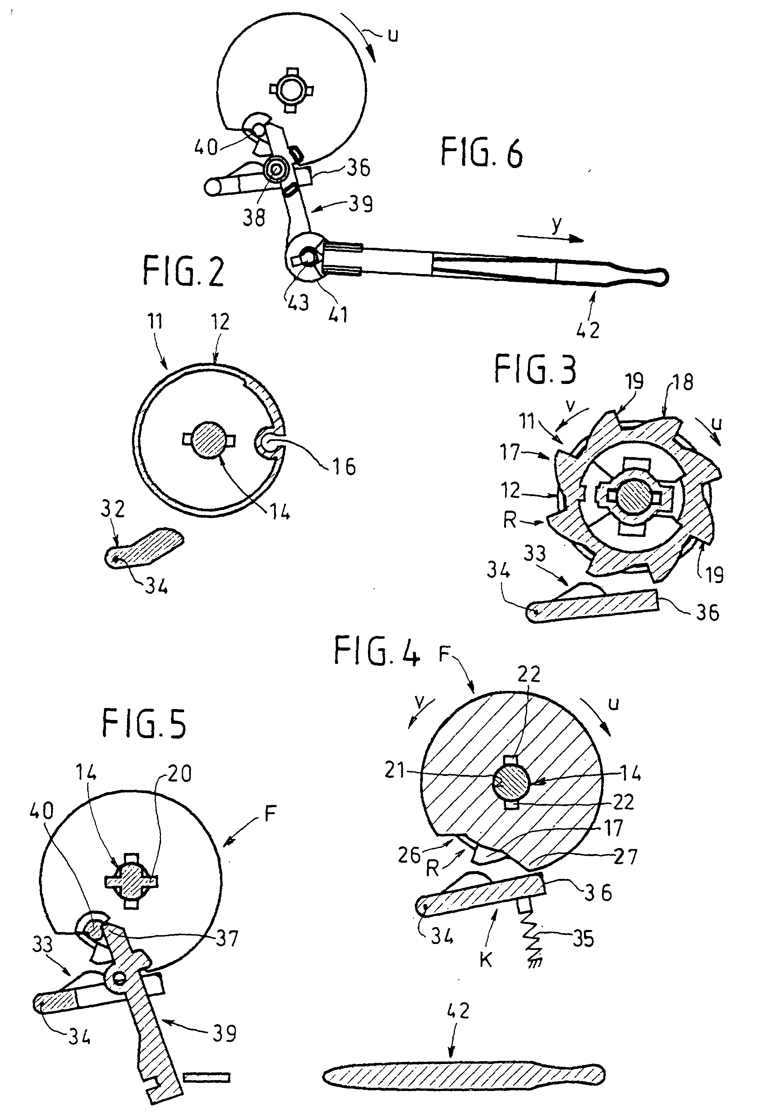

Dieser Umfangswinkel von z.B. 20° steht zu dem Umfangswinkel in einer Beziehung, über den sich die aus Fig. 4 ersichtliche Steuerkurve 26 erstreckt, welche durch eine periphere Aussparung der kreisrunden Reibscheibe F gebildet ist und welche an ihrem einen Ende einen Steuer- oder Betätigungsnocken 27 beinhaltet.

Die Reibscheibe F ist entlang dem mit x bezeichneten Doppelpfeil auf ihrem Drehlagerbereich 25 auf dem Wellenkörper 14 minimal axial beweglich, wird jedoch mittels einer nur angedeuteten Schraubendruckfeder 28, die sich auf einem Widerlager 29 abstützt, mit einer hinreichenden Normalkraft gegen die sich radial erstreckende und nach außen weisende Stirnfläche der Rastscheibe R in Richtung N gedrückt.

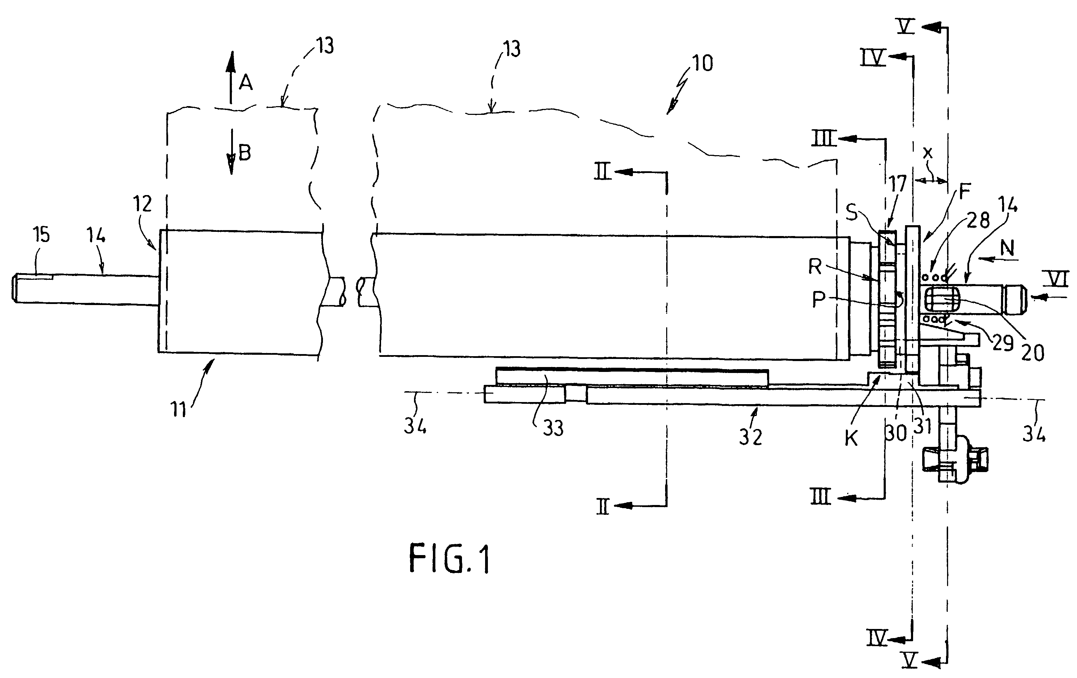

Die Reibscheibe F ist mit einem nur in Fig. 1 angedeuteten kreisringförmigen Bund 30 versehen, welcher mit seiner zur Rastscheibe R hin gerichteten Stirnfläche eine Sekundär-Reibfläche S bildet, die durch die Schraubendruckfeder 28 in Richtung N gegen die von der Stirnseite der Rastscheibe R gebildete Primär-Reibfläche P gedrückt wird.

Mit den Sperrzähnen 17 der Rastscheibe R wirkt eine Sperrklinke K zusammen, deren über die Rastscheibe R axial hinausragender Ansatz einen Betätigungsansatz 31 bildet.

Gemeinsam mit einer Tasterwelle 32, welche einen Tastfinger bzw. eine Tastleiste 33 trägt, ist die Sperrklinke K auf einer strichpunktiert angedeuteten Achse 34 schwenkbar gelagert.

Die Betätigung der Laderaum-Trennvorrichtung 10 geschieht wie folgt:

Wenn die Werkstoffbahn 13 in Abrollrichtung A ausgezogen wird, dreht sich die Wickelwelle 11 mit ihrem Wickelmantel 12 in Abrolldrehrichtung u. Infolge der relativ großen Werkstoffbahn-Wickeldicke bei größtenteils aufgewickelter Werkstoffbahn 13 hält der Tastfinger 33 die Tasterwelle 32 in einer solchen Lage, daß sich die drehfest auf der Tasterwelle 32 angeordnete Sperrklinke K in ihrer Lösestellung (vgl. Fig. 3 und 4) befindet.

Bei weiterhin in Richtung A abrollender Werkstoffbahn 13 sorgt sodann der Reibschluß zwischen den Reibflächen P und S von Rastscheibe R und Reibscheibe F dafür, daß die Reibscheibe F in Abrolldrehrichtung u mitgeschleppt, d.h. um einen bestimmten Umfangswinkel gedreht, wird. Diese Drehung hat zur Folge, daß die Klinke K mittels des Steuernockens 27 entgegen der Rückstellkraft der Feder 35 nach außen in ihre Lösestellung versetzt wird.

Auch wenn der Abrollvorgang unterbrochen wird, hält der Reibschluß zwischen den Reibflächen S und P die Sperrklinke K in ihrer Lösestellung gemäß den Fig. 3 und 4. Erst wenn beim Einhängen des freien Endbereichs der Werkstoffbahn 13 in fahrzeugseitige Befestigungsstellen die Werkstoffbahn 13 in Aufrollrichtung B, und damit im Aufrolldrehsinn v, nachgelassen wird, kann sich die Reibscheibe F in Richtung v drehen. Dabei gibt der Steuernocken 27 die Sperrklinke K frei, so daß diese um die Achse 34 herum in ihre nicht gezeigte Sperrstellung hineinschwenken kann. Der Aufrollvorgang in Aufrollrichtung v wird durch das Formrichtgesperre R, K nicht behindert, da in diesem Falle die Sperrklinke K über die Gleitflanken 18 der Sperrzähne 17 hinweggleiten kann.

In der Sperrstellung liegt die sperrklinkenseitige Sperrfläche 36 an der Sperrflanke 19 des betreffenden Sperrzahns 17 an. Auf diese Weise ist die Werkstoffbahn 13 in Abrolldrehrichtung u gesperrt und damit an der Wickelwelle 11 gesichert.

Für den Fall, daß die Sperrklinke K aus ihrer Sperrstellung bewußt in ihre Lösestellung hineinversetzt werden soll, ist die Reibscheibe F mit einem axial nach außen vorstehenden Zapfen 40 versehen, gegen den ein Nocken 37 eines auf einer Achse 38 schwenkgelagerten Doppelhebels 39 drückt, derart, daß sich die Reibscheibe F in Abrolldrehrichtung u dreht und dabei mittels ihres Steuernockens 27 die Sperrklinke K aus ihrer Sperrstellung heraus in die Lösestellung gemäß den Fig. 3 und 4 drückt.

Der Zapfen 40 kann auch anstelle der in Fig. 7 gezeigten Anschläge 23, 24 die Funktion einer Drehbegrenzung der Reibscheibe F auf einen Umfangswinkel von z.B. 20° erfüllen, indem der Zapfen 40 einen raumfesten kreisförmigen nierenförmigen Kulissenschlitz durchgreift, der sich über den Umfangswinkel von z.B. 20° erstreckt.

Zur Betätigung des Doppelhebels 39 weist dieser einen Zapfen 43 auf, welcher von einer Zugöse 41 eines Zug-Handgriffes 42 übergriffen ist. Wenn der Zughandgriff 42 in Richtung y gezogen wird, wird also die Reibscheibe F in Abrolldrehrichtung u gedreht und damit die Sperrklinke K - wie bereits vorbeschrieben - in ihre Lösestellung versetzt.

## Patentansprüche

1. Laderaum-Trennvorrichtung (10) für Kraftwagen, insbesondere für Kombinations-Personenkraftwagen, mit einer entgegen dem Drehmoment eines Motors von einer Wickelwelle (11), die fahrzeugseitig in einer Halterung aufnehmbar ist, abrollbaren, mit ihrem abgerollten freien Endbereich fahrzeugseitig lösbar festlegbaren Werkstoffbahn (13), wobei mit der Wickelwelle (11) mindestens eine Rastscheibe (R) drehfest ist, mit der eine in der Halterung gelagerte Sperrklinke (K) kooperiert, welche von einer Rückstellkraft (35) in ihrer Sperrstellung gehalten ist und dabei die Wickelwelle (11) in eine Richtung (A) gegen ein Abrollen der Werkstoffbahn (13) blockiert, und welche Sperrklinke mittels einer Betätigungsvorrichtung (F) in ihre Sperr- oder Lösestellung versetzbar ist, **dadurch gekennzeichnet, daß** die Betätigungsvorrichtung ein mit der Wickelwelle (11) mindestens mittelbar durch Reibschluß auf Drehmitnahme gekuppeltes Betätigungsglied (F) aufweist, welches mit einer Sekundär-Reibfläche (S) gegen eine mit der Wikkelwelle (11) drehfeste Primär-Reibfläche (P) drückt und bei Drehung der Wickelwelle (11) in Abrolldrehrichtung (u) die Sperrklinke (K) mittels eines Betätigungsnockens (27) in ihre Lösestellung versetzt, und daß bei Drehung der Wickelwelle (11) in Aufrolldrehrichtung (v) der Betätigungsnocken (27) ein Schwenken der Sperrklinke (K) in ihre Sperrstellung erlaubt.

2. Laderaum-Trennvorrichtung nach Anspruch 1, **gekennzeichnet durch** eine druckfeste Bewegungskupplung zwischen Betätigungsglied (F) und Sperrklinke (K).

3. Laderaum-Trennvorrichtung nach Anspruch 2, **dadurch gekennzeichnet, daß** das Betätigungsglied (F) an seinem Außenumfang den die Sperrklinke (K) in ihre Lösestellung drückenden Betätigungsnocken (27) aufweist.

4. Laderaum-Trennvorrichtung nach einem der Ansprüche 1 bis 3, **dadurch gekennzeichnet, daß** das Betätigungsglied eine koaxial zur Wickelwelle (11) gelagerte, relativ zur Wickelwelle (11) drehbare, die Sekundär-Reibfläche (S) aufweisende Reibscheibe (F) ist.

5. Laderaum-Trennvorrichtung nach Anspruch 4, **dadurch gekennzeichnet, daß** die Rastscheibe (R) stirnendseitig an der Wickelwelle (11) angeordnet ist, wobei die Reibscheibe (F) mit ihrer sekundären Reibfläche (S) gegen die sich radial erstreckende, nach außen weisende, an der Stirnfläche der Rastscheibe (R) angeordnete Primär-Reibfläche (P) drückt.

6. Laderaum-Trennvorrichtung nach Anspruch 4 oder nach Anspruch 5, **dadurch gekennzeichnet, daß** die Reibscheibe (F) auf dem Lagerende der Wickelwelle (11) drehgelagert ist.

7. Laderaum-Trennvorrichtung nach einem der Ansprüche 4 bis 6, **dadurch gekennzeichnet, daß** die Reibscheibe (F) axial beweglich auf dem Lagerende (25) der Wickelwelle (11) angeordnet, und mit ihrer Sekundär-Reibfläche (S) mittels Federkraft (28) gegen die Primär-Reibfläche (P) angedrückt gehalten ist.

8. Laderaum-Trennvorrichtung nach einem der Ansprüche 4 bis 7, **dadurch gekennzeichnet, daß** die Reibscheibe (F) einen zur Rastscheibe (R) hin axial vorstehenden Ringbund (30) aufweist, dessen Radialfläche die Sekundär-Reibfläche (S) bildet.

9. Laderaum-Trennvorrichtung nach einem der Ansprüche 4 bis 8, **dadurch gekennzeichnet, daß** die Reibscheibe (F) an ihrem Außenumfang eine den Betätigungsnocken (27) beinhaltende Steuerkurve (26) bildet.

10. Laderaum-Trennvorrichtung nach einem der Ansprüche 4 bis 9, **dadurch gekennzeichnet, daß** die Reibscheibe (F) nur über einen begrenzten Umfangswinkel relativ zur Wickelwelle (11) drehbar ist.

11. Laderaum-Trennvorrichtung nach Anspruch 9 oder nach Anspruch 10, **dadurch gekennzeichnet, daß** der begrenzte Umfangswinkel zu dem Umfangswinkel in Beziehung steht, über welchen sich die Steuerkurve (26) erstreckt.

12. Laderaum-Trennvorrichtung nach einem der Ansprüche 1 bis 11, **dadurch gekennzeichnet, daß** die Sperrklinke (K) zu ihrer druckfesten Bewegungskupplung mit dem Betätigungsglied (F) einen über die Rastscheibe (R) axial hinausragenden Betätigungsansatz (31) bildet.

13. Laderaum-Trennvorrichtung nach einem der Ansprüche 9 bis 12, **dadurch gekennzeichnet, daß** die Steuerkurve (26) am Betätigungsansatz (31) anliegt.

14. Laderaum-Trennvorrichtung nach einem der Ansprüche 1 bis 13, **dadurch gekennzeichnet, daß** die Sperrklinke (K) auf einer sich parallel zur Wickelwelle (11) erstreckenden Tasterwelle (32) drehfest angeordnet ist, welche einen die auf der Wickelwelle (11) aufgerollte Werkstoffbahn (13) außen tangierenden Tastfinger (33) trägt, der bei einer bestimmten Werkstoffbahn-Wikkeldicke die Sperrklinke (K) außer Eingriff mit der Rastscheibe (R) versetzt.

15. Laderaum-Trennvorrichtung nach einem der Ansprüche 1 bis 14, **dadurch gekennzeichnet, daß** die Sperrklinke (K) zusätzlich mittels einer Handbetätigungsvorrichtung (39, 42) in ihre Lösestellung versetzbar ist.

16. Laderaum-Trennvorrichtung nach Anspruch 15, **dadurch gekennzeichnet, daß** die Reibscheibe (F) einen axial nach außen vorstehenden Zapfen (40) aufweist, an welchen die Handbetätigungsvorrichtung (39, 42) angelenkt ist.

## Claims

1. A luggage compartment partition device (10) for motor vehicles, in particular for estate cars, comprising a web of material (13) which can be unrolled from a winding shaft (11) against the torque of a motor, which winding shaft (11) can be mounted in a bracket on the vehicle structure, the web of material (13) being detachably fixable to the vehicle structure by its unrolled free end portion, at least one locking disc (R) being non-rotatable with respect to the winding shaft (11) and co-operating with a locking catch (K) pivoted on the bracket, which locking catch (K) is held in its locking position by a restoring force (35), thereby locking the winding shaft (11) in a direction (A) against the unrolling of the web of material (13), and which locking catch (K) is movable to its locking or released position by means of an actuating device (F), **characterised in that** the actuating device has an actuating member (F) rotationally coupled at least indirectly by frictional engagement to the winding shaft (11), which actuating member (F) presses with a secondary friction surface (S) against a primary friction surface (P) which is non-rotatable with respect to the winding shaft (11), and which actuating member (F) moves the locking catch (K) to its released position by means of an actuating cam face (27) when the winding shaft (11) is rotated in the unrolling direction (u), and **in that** the actuating cam face (27) allows the locking catch (K) to pivot to its locking position when the winding shaft (11) is rotated in the rolling-up direction (v).

2. Luggage compartment partition device according to Claim 1, **characterised by** a pressure-proof motional coupling between the actuating member (F) and the locking catch (K).

3. Luggage compartment partition device according to Claim 2, **characterised in that** the actuating member (F) includes on its outer periphery the actuating cam face (27) which presses the locking catch (K) into its released position.

4. Luggage compartment partition device according to any one of claims 1 to 3, **characterised in that** the actuating member is a friction plate (F) journalled coaxially with the winding shaft (11), rotatable relatively to the winding shaft (11) and including the secondary friction surface (s).

5. Luggage compartment partition device according to Claim 4, **characterised in that** the locking disc (R) is arranged on the end of the winding shaft (11), the friction plate (F) pressing with its secondary friction surface (S) against the radially outwardly extending primary friction surface (P) arranged on the end face of the locking disc (R).

6. Luggage compartment partition device according to Claim 4 or Claim 5, **characterised in that** the friction plate (F) is mounted rotatably on the bearing end of the winding shaft (11).

7. Luggage compartment partition device according to any one of claims 4 to 6, **characterised in that** the friction plate (F) is arranged to be axially movable on the bearing end (25) of the winding shaft (11) and its secondary friction surface (S) is pressed against the primary friction surface (P) by spring pressure (28).

8. Luggage compartment partition device according to any one of claims 4 to 7, **characterised in that** the friction plate (F) has an annular shoulder (30) projecting axially towards the locking disc (R), the radial face of which annular shoulder (30) forms the secondary friction surface (S) .

9. Luggage compartment partition device according to any one of claims 4 to 8, **characterised in that** the friction plate (F) has on its outer periphery a cam (26) including the actuating cam face (27).

10. Luggage compartment partition device according to any one of claims 4 to 9, **characterised in that** the friction plate (F) is rotatable relatively to the winding shaft (11) through only a limited angle at circumference.

11. Luggage compartment partition device according to Claim 9 or Claim 10, **characterised in that** the limited angle at circumference is related to the angle at circumference over which the cam (26) extends.

12. Luggage compartment partition device according to any one of claims 1 to 11, **characterised in that** the locking catch (K) has an actuating projection (31) extending axially beyond the locking disc (R) to allow its pressure-proof motional coupling to the actuating member (F).

13. Luggage compartment partition device according to any one of claims 9 to 12, **characterised in that** the cam (26) abuts the actuating projection (31).

14. Luggage compartment partition device according to any one of claims 1 to 13, **characterised in that** the locking catch (K) is arranged non-rotatably on a tracing shaft (32) extending parallel to the winding shaft (11), which tracing shaft (32) carries a tracing finger (33) touching the outside of the web of material (13) rolled on to the winding shaft (11), which tracing finger (33) moves the locking catch (K) out of engagement with the locking disc (R) when a specific thickness of wound-on material has been reached.

15. Luggage compartment partition device according to any one of claims 1 to 14, **characterised in that** the locking catch (K) is additionally movable to its released position by means of a manual actuating device (39, 42).

16. Luggage compartment partition device according to Claim 15, **characterised in that** the friction plate (F) has an axially outwardly projecting spigot (40) to which the manual actuating device (39, 42) is articulated.

## Revendications

1. Dispositif de compartimentage d'espace de chargement (10) pour des véhicules automobiles, en particulier pour des véhicules combinés de transport de personnes, avec une bande de matériau (13), susceptible d'être fixée de façon désolidarisable, côté véhicule, par sa zone d'extrémité libre, déroulée, la bande de matériau étant susceptible d'être déroulée depuis un arbre d'enroulement (11), à l'encontre du couple exercé par un moteur, l'arbre d'enroulement étant susceptible d'être supporté côté véhicule dans une fixation, où à l'arbre d'enroulement (11) est relié, de façon assujettie en rotation, au moins un disque d'encliquetage (R) avec lequel coopère un cliquet de blocage (K) monté dans la fixation et maintenu à sa position de blocage par un ressort de rappel (35) et bloquant alors l'arbre d'enroulement (11) en une direction (A) contre tout déroulement de la bande de matériau (13), et ledit cliquet de blocage étant déplaçable à sa position de blocage ou de libération, à l'aide d'un dispositif d'actionnement (F), **caractérisé en ce que** le dispositif d'actionnement présente un organe d'actionnement (F) couplé en entraînement en rotation à l'arbre d'enroulement (11), au moins indirectement, par une liaison à friction, organe d'actionnement qui, par une face de friction secondaire (S), presse contre une face de friction primaire (P) assujettie en rotation à l'arbre d'enroulement (11) et qui, lorsque l'arbre d'enroulement (11) tourne dans le sens de rotation de déroulement (u), fait passer le cliquet de blocage (K) à sa position de désolidarisation à l'aide d'un ergot d'actionnement (27), et **en ce que**, lors de la rotation de l'arbre d'enroulement (11) dans le sens de rotation d'enroulement (v), l'ergot d'actionnement (27) permet un pivotement du cliquet de blocage (K) à sa position de blocage.

2. Dispositif de compartimentage d'espace de chargement selon la revendication 1, **caractérisé par** un accouplement cinématique résistant à la pression, entre l'organe d'actionnement (F) et le cliquet de blocage (K).

3. Dispositif de compartimentage d'espace de chargement selon la revendication 2, **caractérisé en ce que** l'organe d'actionnement (F) présente, sur sa périphérie extérieure, l'ergot d'actionnement (27) pressant le cliquet de blocage (K) à sa position de désolidarisation.

4. Dispositif de compartimentage d'espace de chargement selon l'une des revendications 1 à 3, **caractérisé en ce que** l'organe d'actionnement est un disque de friction (F), monté coaxialement par rapport à l'arbre d'enroulement (11), susceptible de tourner par rapport à l'arbre d'enroulement (11) et présentant la surface de friction secondaire (S).

5. Dispositif de compartimentage d'espace de chargement selon la revendication 4, **caractérisé en ce que** le disque de friction (R) est disposé du côté de l'extrémité frontale sur l'arbre d'enroulement (11), le disque de friction (F) pressant, par sa face de friction secondaire (S), contre la face de friction primaire (P) tournée vers l'extérieur, s'étendant radialement, disposée sur la face frontale du disque d'encliquetage (R).

6. Dispositif de compartimentage d'espace de chargement selon la revendication 4 ou la revendication 5, **caractérisé en ce que** le disque de friction (F) est monté à rotation sur l'extrémité de palier de l'arbre d'enroulement (11).

7. Dispositif de compartimentage d'espace de chargement selon l'une des revendications 4 à 6, **caractérisé en ce que** le disque de friction (F) est disposé de façon mobile axialement sur l'extrémité de palier (25) de l'arbre d'enroulement (11) et est maintenu pressé contre la face de friction primaire (P) par sa face de friction secondaire (S), à l'aide d'une force élastique (28).

8. Dispositif de compartimentage d'espace de chargement selon l'une des revendications 4 à 7, **caractérisé en ce que** le disque de friction (F) présente une collerette annulaire (30), faisant saillie axialement par rapport au disque de friction (R), dont la face radiale forme la face de friotion secondaire (S).

9. Dispositif de compartimentage d'espace de chargement selon l'une des revendications 4 à 8, **caractérisé en ce que** le disque de friction (F) forme, sur sa périphérie extérieure, une came de commande (26) contenant l'ergot d'actionnement (27).

10. Dispositif de compartimentage d'espace de chargement selon l'une des revendications 4 à 9, **caractérisé en ce que** le disque de friction (F) est susceptible de tourner par rapport à l'arbre d'enroulement (11), uniquement sur la valeur d'un angle périphérique limité.

11. Dispositif de compartimentage d'espace de chargement selon la revendication 9, ou selon la revendication 10, **caractérisé en ce que** l'angle périphérique limité est en relation par rapport à l'angle périphérique sur lequel s'étend la came de commande (26).

12. Dispositif de compartimentage d'espace de chargen-ient selon l'une des revendications 1 à 11, **caractérisé en ce que** le cliquet de blocage (K) forme, pour son accouplement cinématique, résistant à la pression, envers l'organe d'actionnement (F), un appendice d'actionnement (31) ressortant axialement du disque d'encliquetage (R).

13. Dispositif de compartimentage d'espace de chargement selon l'une des revendications 9 à 12, **caractérisé en ce que** la came de commande (26) est en appui sur l'appendice d'actionnement (31).

14. Dispositif de compartimentage d'espace de chargement selon l'une des revendications 1 à 13, **caractérisé en ce que** le cliquet de blocage (K) est disposé de façon assujettie en rotation sur un arbre de palpeur (32) s'étendant parallèlement à l'arbre d'enroulement (11), arbre de palpeur portant un doigt de palpage (33), tangent extérieurement à la bande de matériau (13) enroulée sur l'arbre d'enroulement (11) et faisant passer le cliquet de blocage (K) hors de prise vis-à-vis du disque d'encliquetage (R), pour une épaisseur d'enroulement déterminée de la bande de matériau.

15. Dispositif de compartimentage d'espace de chargement selon l'une des revendications 1 à 14, **caractérisé en ce que** le cliquet de blocage (K) peut être passé à sa position de libération, en plus, à l'aide d'un dispositif d'actionnement manuel (39, 42).

16. Dispositif de compartimentage d'espace de chargement selon la revendication 15, **caractérisé en ce que** le disque de friction (F) présente un téton (40) en saillie axialement vers l'extérieur, sur lequel le dispositif d'actionnement manuel (39, 42) est articulé.
